# EUROPEAN PATENT APPLICATION

(11) **EP 4 681 949 A1**
(43) Date of publication of application: **21.01.2026**
(21) Application number: 25185887.4
(22) Date of filing: 27.06.2025
(51) Int. Cl.: B60K 1/04, B60K 1/02

(54) **ELECTRIC VEHICLE**

(30) Priority: 18.07.2024 JP 2024114860
(71) Applicant: TOYOTA JIDOSHA KABUSHIKI KAISHA, Toyota-shi, Aichi-ken 471-8571 (JP)
(72) Inventor: IWASAKI, Nanae, TOYOTA-SHI, AICHI-KEN, 471-8571 (JP)
(74) Representative: Cabinet Beau de Loménie

(57) **Abstract**

A first-row seat (17) and a second-row seat (18) are arranged on a floor (16) of a vehicle (10). The second-row seat is located rearward of the first-row seat. A battery (15) is arranged below the floor. A first integrated electromechanical unit (13) is located frontward of the battery (15). A second integrated electromechanical unit (14) is arranged rearward of the battery. The electric vehicle includes a vehicle on-board charger (20), a battery ECU (21), and a junction box (22) as battery-related devices. The battery ECU (21) and the junction box (22) are located below the second-row seat ( and above the battery. The vehicle on-board charger (20) is located above the second integrated electromechanical unit (14).

## Description

### BACKGROUND

### 1. Field

The present disclosure relates to an electric vehicle.

### 2. Description of Related Art

Japanese Laid-Open Patent Publication No. 2018-158688 discloses an electric vehicle in which a battery is arranged below the floor of the passenger compartment.

Japanese Laid-Open Patent Publication No. 2018-158688 does not disclose, as part of the vehicle lower structure, a configuration related to battery-related devices that charge the battery or distribute electric power supplied from the battery. In an electric vehicle in which a battery is arranged below the floor, there is room for improvement in the arrangement of battery-related devices.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides an electric vehicle having a drive wheel that is driven by electric power stored in a battery. The electric vehicle includes a first motor and a second motor which serve as a power source for driving the drive wheel and to which the electric power stored in the battery is supplied, a first electric power controller that supplies electric power to the first motor, a second electric power controller that supplies electric power to the second motor, a first integrated electromechanical unit including the first motor and the first electric power controller, a second integrated electromechanical unit including the second motor and the second electric power controller, and battery-related devices. The battery is located below a floor of the electric vehicle and between the front wheel and the rear wheel. The first integrated electromechanical unit is located frontward of the battery. The second integrated electromechanical unit is located rearward of the battery. A first-row seat and a second-row seat are arranged on the floor, the second-row seat being located rearward of the first-row seat. A plurality of battery-related devices are separately disposed below the second-row seat and above the battery, and above the second integrated electromechanical unit.

Other features and aspects will be apparent from the following detailed description, the drawings, and the claims.

### BRIEF DESCRIPTION OF THE DRAWINGS

Fig. 1 is a schematic diagram illustrating the configuration of the electric system and the drive system in an electric vehicle according to a first embodiment.
Fig. 2 is a schematic diagram illustrating the arrangement of the devices in the electric vehicle according to the first embodiment.
Fig. 3 is a cross-sectional view of the electric vehicle taken along line 3-3 in Fig. 2.
Fig. 4 is a cross-sectional view of the electric vehicle taken along line 4-4 in Fig. 2.
Fig. 5 is a schematic diagram illustrating the arrangement of the devices in the electric vehicle according to a second embodiment.
Fig. 6 is a cross-sectional view of the electric vehicle taken along line 6-6 in Fig. 5.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

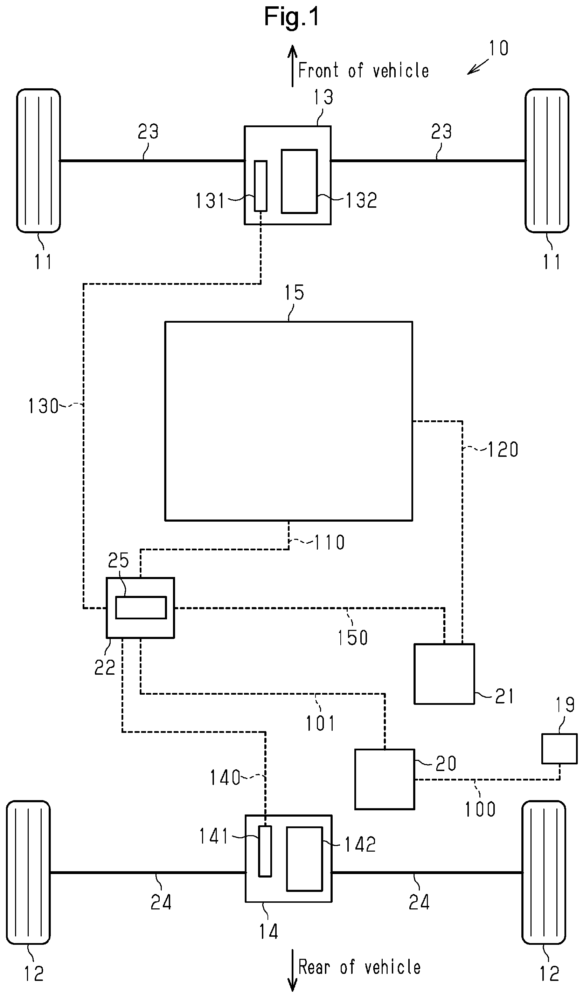

An electric vehicle according to a first embodiment will now be described with reference to Figs. 1 to 4. In the following description, terms indicating directionality, such as "front," "rear," "left," "right," "upper," and "lower" refer to directions as seen by an occupant in a state in which the electric vehicle 10 is oriented forward. The left-right direction coincides with the width direction of the electric vehicle 10.

### Devices in Electric Vehicle 10

As shown in Fig. 1, the electric vehicle 10 includes front wheels 11, rear wheels 12, a first integrated electromechanical unit 13, a second integrated electromechanical unit 14, a battery 15, a first drive shaft 23, a second drive shaft 24, and a charging port 19. The first integrated electromechanical unit 13 includes a first electric power controller 131, a first motor 132, and a power transmission mechanism (not shown). The second integrated electromechanical unit 14 includes a second electric power controller 141, a second motor 142, and a power transmission mechanism (not shown). Further, the electric vehicle 10 includes, as battery-related devices, a vehicle on-board charger 20, a battery electronic control unit (ECU) 21, and a junction box 22. The junction box 22 includes a cutoff relay 25. An ECU includes a central processing unit (CPU) and a memory that stores control programs and data. The ECU executes various control processes by instructing the CPU to execute programs stored in the memory.

### Electric System of Electric Vehicle 10

The broken lines shown in Fig. 1 indicate wire harnesses. The charging port 19 and the vehicle on-board charger 20 are electrically connected to each other by a wire harness 100. The junction box 22 and the battery 15 are electrically connected to each other by a wire harness 110. The battery ECU 21 and the battery 15 are electrically connected to each other by a wire harness 120. The junction box 22 and the first electric power controller 131 are electrically connected to each other by a wire harness 130. The junction box 22 and the second electric power controller 141 are electrically connected to each other by a wire harness 140. The junction box 22 and the vehicle on-board charger 20 are electrically connected to each other by a wire harness 101. The junction box 22 and the battery ECU 21 are electrically connected to each other by a wire harness 150.

### Battery-Related Devices in Electric Vehicle 10

The vehicle on-board charger 20, which is a battery-related device, charges the battery 15 with electric power from an external charging device. The vehicle on-board charger 20 receives AC power from an AC power supply, which is connected to the charging port 19, via the wire harness 100. A charging plug of the external charging device is inserted into the charging port 19. The charging port 19 and the vehicle on-board charger 20 are used for standard charging, which is performed using an AC power supply (e.g., 100 V or 200 V). The vehicle on-board charger 20 converts the received AC power into DC power. The vehicle on-board charger 20 inputs the converted DC power to the battery 15 through the wire harness 101, the junction box 22, and the wire harness 110. Thus, the battery 15 is charged by the external charging device.

The battery ECU 21, which is a battery-related device, controls charging and discharging of the battery 15. The battery ECU 21 acquires information such as the input current, output current, voltage, and temperature of the battery 15 via the wire harness 120. Based on the acquired information, the battery ECU 21 estimates a capacity CH of the battery 15, a full charge capacity CHmax of the battery 15, a state of charge SOC of the battery 15, and a state of health SOH of the battery 15. The capacity CH of the battery 15 is the amount of electric power stored in the battery 15 at the point in time when the battery ECU 21 acquired the information. The full charge capacity CHmax of the battery 15 is the maximum amount of electric power that the battery 15 can store at the point in time when the battery ECU 21 acquired the information. The state of charge SOC of the battery 15 is the value obtained by dividing the full charge capacity CHmax by the capacity CH. The state of health SOH of the battery 15 is an index of how much the full charge capacity CHmax of the battery 15 at the point in time when the battery ECU 21 acquired the information has decreased, compared to the full charge capacity CHmax of battery 15 at the time of factory shipment. The battery ECU 21 controls the charging and discharging of the battery 15 based on the capacity CH of the battery 15, the full charge capacity CHmax, the state of charge SOC, and the state of health SOH.

The junction box 22, which is a battery-related device, distributes the DC power supplied from the battery 15 to multiple devices. The junction box 22 supplies, to the first electric power controller 131, a high-voltage DC power output from the battery 15 via the wire harness 130. The junction box 22 supplies, to the second electric power controller 141, a high-voltage DC power output from the battery 15 via the wire harness 140. The junction box 22 includes a DC-to-DC converter that steps down the voltage of the DC power supplied from the battery 15 via the wire harness 110. The junction box 22 supplies the DC power, which has been stepped down by the DC-to-DC converter, to the battery ECU 21 via the wire harness 150.

The junction box 22 may be configured to supply the DC power, which has been stepped down by the DC-to-DC converter, to components other than the battery ECU 21. For example, the junction box 22 may be configured to supply the DC power, which has been stepped down by the DC-to-DC converter, to auxiliary devices (e.g., an electric power steering system and an electric oil pump). The electric power steering system is a mechanism that assists the driver's steering operation. The electric oil pump is a mechanism that draws in lubricating oil and use it for cooling and lubricating a motor.

The junction box 22 includes the cutoff relay 25. The cutoff relay 25 is a relay circuit that switches between a connected state, in which electric power supplied from the battery 15 via the wire harness 110 is allowed to flow, and a cutoff state, in which the electric power is blocked. When the cutoff relay 25 is in the cutoff state, the battery 15 is electrically disconnected from the junction box 22. As a result, the devices connected to the junction box 22 by the wire harnesses are also electrically disconnected from the battery 15.

### Drive System of Electric Vehicle 10

The first motor 132 and the second motor 142 serve as power sources to drive the drive wheels. The battery 15 stores electric power that is supplied to the first motor 132 and the second motor 142. The electric vehicle 10 uses the electric power stored in the battery 15 to drive the drive wheels. The first motor 132 drives the front wheels 11 via first drive shafts 23. The front wheels 11 are included in the drive wheels. The second motor 142 drives the rear wheel 12 via second drive shafts 24. The rear wheels 12 are included in the drive wheels.

The first electric power controller 131 supplies electric power to the first motor 132. The first electric power controller 131 includes an inverter that converts the DC power supplied from the battery 15 via the junction box 22 into AC power, which is then supplied to the first motor 132. The second electric power controller 141 supplies electric power to the second motor 142. The second electric power controller 141 includes an inverter that converts the DC power supplied from the battery 15 via the junction box 22 into AC power, which is then supplied to the second motor 142.

Each integrated electromechanical unit may include, as the electric power controller, devices other than the inverter. For example, the integrated electromechanical unit may include a DC-to-DC converter that boosts the DC power supplied from the battery 15 via the junction box 22, in addition to the inverter. In this case, the inverter provided as part of the electric power controller converts, into AC power, the DC power supplied from the DC-to-DC converter and supplies it to the motor. The integrated electromechanical unit may include, as the electric power controller, an ECU that controls the electric power supplied to the motor.

### Internal Structure of Electric Vehicle 10 in the First Embodiment

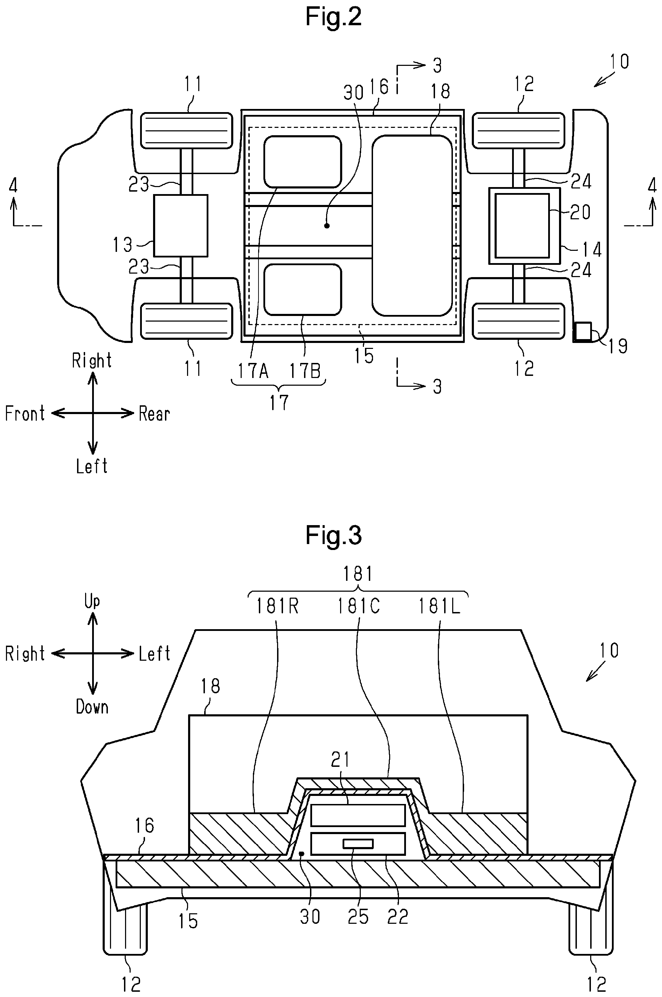

Fig. 2 schematically illustrates the arrangement of the devices in a top view of the electric vehicle 10 in the first embodiment. The battery 15, indicated by the broken line, is located below the floor 16. The first integrated electromechanical unit 13 is located frontward of the battery 15. The second integrated electromechanical unit 14 is located rearward of the battery 15. The battery 15 is located between the first integrated electromechanical unit 13 and the second integrated electromechanical unit 14. The battery 15 is located between the front wheels 11 and the rear wheels 12. The vehicle on-board charger 20 is located above the second integrated electromechanical unit 14. The charging port 19 is located rearward of the battery 15 on the left side of the electric vehicle 10.

First-row seats 17 and a second-row seat 18 are arranged above the floor 16. The second-row seat 18 is located rearward of the first-row seats 17. The first-row seats 17 include a right seat 17A and a left seat 17B. The seats 17A and 17B are laterally arranged side by side. A center tunnel 30, which will be described later, is arranged between the seats 17A and 17B.

Fig. 3 is a schematic cross-sectional view taken along line 3-3 in Fig. 2. The positional relationship between the second-row seat 18, the center tunnel 30, the battery ECU 21, and the junction box 22 will now be described with reference to Fig. 3. As shown in Fig. 3, the floor 16 is bent upward in a convex shape. As a result, the center tunnel 30 is located below the floor 16 and above the battery 15. The center tunnel 30 is located below seat surfaces 181 of the second-row seat 18. The seat surfaces 181 of the second-row seat 18 are also bent upward in a convex shape in conformance with the bending of the floor 16. The seat surfaces 181 include a seat surface 181R, which is located on the right side of the center tunnel 30, a seat surface 181C, which is located above the center tunnel 30, and a seat surface 181L, which is located on the left side of the center tunnel 30. The seat surfaces 181R, 181C, and 181L are the seat surfaces 181 that are continuous with each other. The seat surface 181R is the seat surface 181 on the right side of the second-row seat 18. The seat surface 181L is the seat surface 181 on the left side of the second-row seat 18. The seat surfaces 181R and 181L are located below the seat surface 181C.

The battery ECU 21 and the junction box 22 are located inside the center tunnel 30, which is located below the second-row seat 18 and above the battery 15. As viewed from above, the junction box 22 overlaps the battery 15. As viewed from above, the battery ECU 21 overlaps the junction box 22. The battery ECU 21 and the junction box 22 are located below the seat surface 181C. No battery-related device is arranged below the seat surfaces 181R and 181L.

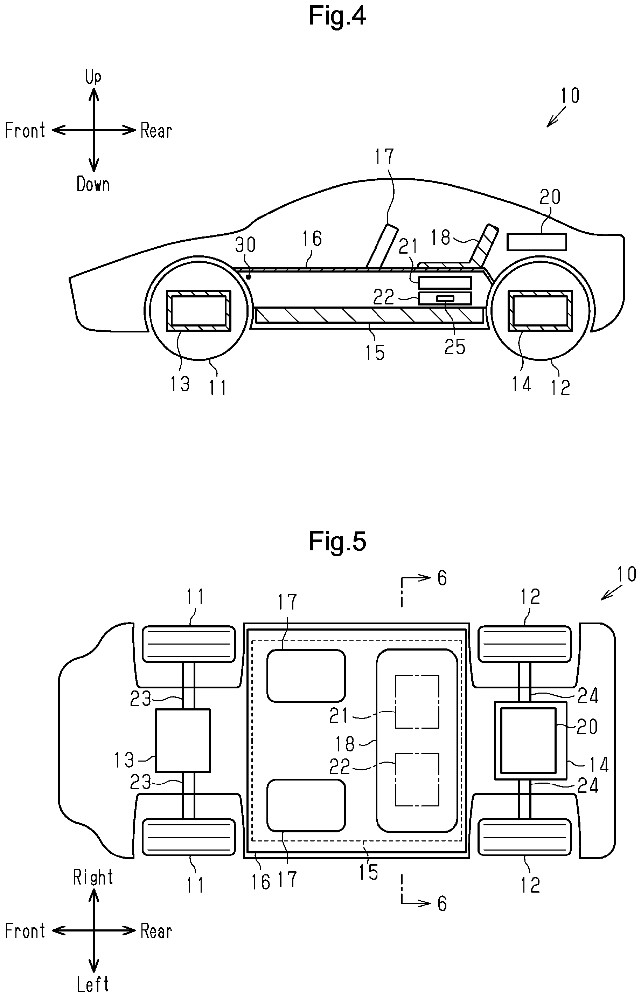

Fig. 4 is a cross-sectional view taken along line 4-4 in Fig. 2. Fig. 4 schematically illustrates the internal structure of the electric vehicle 10 as seen from the left side. As shown in Fig. 4, the center tunnel 30 extends in the front-rear direction. The vehicle on-board charger 20 is located above the second integrated electromechanical unit 14.

### Operation of the First Embodiment

As shown in Fig. 3, the battery ECU 21 and the junction box 22 are located inside the center tunnel 30, which is located below the seat surface 181C, rather than below the left seat surface 181L or the right seat surface 181R of the second-row seat 18. Accordingly, compared to a vehicle in which the center tunnel 30 is not arranged and battery-related devices are arranged below the left seat surface 181L or the right seat surface 181R of the second-row seat 18, the position of the seat surface 181 is lower. Specifically, the positions of the seat surfaces 181R and 181L of the second-row seat 18, where the occupant is seated, are lower. This allows the seating position of the occupant to be lower, and thus the entire height of the electric vehicle 10 becomes lower.

### Advantages of the First Embodiment

(1-1) The electric vehicle 10 has a low-profile appearance.
(1-2) The vehicle on-board charger 20 is located above the second integrated electromechanical unit 14. The second integrated electromechanical unit 14 is located rearward of the battery 15. The charging port 19 is located rearward of the battery 15 and positioned on the left side of the electric vehicle 10. That is, the vehicle on-board charger 20 and the charging port 19 are located rearward of the battery 15. Accordingly, compared to a vehicle in which the vehicle on-board charger 20 is located below the second-row seat 18 and above the battery 15, the distance between the vehicle on-board charger 20 and the charging port 19 is shorter. This shortens the wire harness 100, which connects the vehicle on-board charger 20 to the charging port 19. The shorter the wire harness 100 is, the less its weight. That is, the weight of the electric vehicle 10 is reduced. Additionally, a shorter wire harness reduces power loss within the wire harness. Furthermore, the power loss in the wire harness 100, which connects the vehicle on-board charger 20 to the charging port 19, is reduced.
(1-3) The battery 15 is connected to the junction box 22 by the wire harness 110. The junction box 22 is located below the second-row seat 18 and above the battery 15. In this configuration, as compared to a configuration in which the junction box 22 is located above the second integrated electromechanical unit 14, the distance between the junction box 22 and the battery 15 is shorter. This shortens the wire harness 110, which connects the battery 15 to the junction box 22. The shorter the wire harness 100 is, the less its weight. That is, the weight of the electric vehicle 10 is reduced. Further, a shorter wire harness reduces power loss within the wire harness. Furthermore, the electric vehicle 10 has a lower power loss in the wire harness 110, which connects the battery 15 to the junction box 22.
(1-4) The wire harness 110, which connects the junction box 22 to the battery 15, may receive a relatively high voltage. The junction box 22 is located below the second-row seat 18 and above the battery 15. The junction box 22 includes the cutoff relay 25. Thus, compared to when the junction box 22 is located above the second integrated electromechanical unit 14, the cutoff relay 25 interrupts the high-voltage power supplied from the battery 15 at a position closer to the battery 15. This allows the electric vehicle 10 to achieve higher safety.

### Modification of the First Embodiment

The first embodiment may be modified as follows. The present embodiment and the following modifications can be combined if the combined modifications remain technically consistent with each other.

The junction box 22 may overlap the battery ECU 21 from above at a location inside the center tunnel 30, which is located below the second-row seat 18 and above the battery 15. Even in such a case, as compared to a configuration in which the junction box 22 is located above the second integrated electromechanical unit 14, the distance between the junction box 22 and the battery 15 is shorter. This shortens the wire harness 110, which connects the battery 15 to the junction box 22.

The battery-related devices do not have to vertically overlap each other inside the center tunnel 30, which is located below the second-row seat 18 and above the battery 15. For example, the battery ECU 21 and the junction box 22 may be located in the front-rear direction inside the center tunnel 30, which is located below the second-row seat 18 and above the battery 15. For example, the battery ECU 21 and the junction box 22 may be laterally located inside the center tunnel 30, which is located below the second-row seat 18 and above the battery 15.

If at least one battery-related device is arranged inside the center tunnel 30, which is located below the second-row seat 18 and above the battery 15, and at least one battery-related device is located above the second integrated electromechanical unit 14, the battery ECU 21 may be located above the second integrated electromechanical unit 14.

If at least one battery-related device is arranged inside the center tunnel 30, which is located below the second-row seat 18 and above the battery 15, and at least one battery-related device is located above the second integrated electromechanical unit 14, the junction box 22 may be located above the second integrated electromechanical unit 14.

If at least one battery-related device is arranged inside the center tunnel 30, which is located below the second-row seat 18 and above the battery 15, and at least one battery-related device is located above the second integrated electromechanical unit 14, the vehicle on-board charger 20 may be located inside the center tunnel 30.

### Second Embodiment

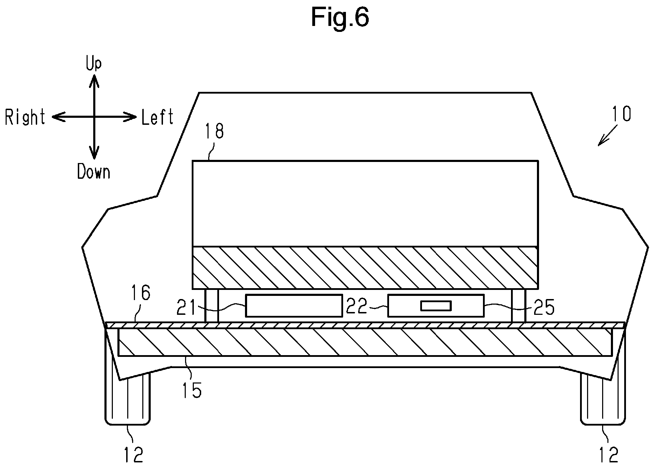

A second embodiment will now be described with reference to Figs. 5 and 6. The second embodiment will be described, with a focus on the differences from the first embodiment. The electric vehicle 10 of the second embodiment does not include the center tunnel 30 of the electric vehicle 10 of the first embodiment.

Internal Structure of Electric Vehicle 10 in the Second Embodiment

Fig. 5 schematically illustrates the arrangement of the devices in a top view of the electric vehicle 10 in the second embodiment. The battery 15, indicated by the broken line, is located below the floor 16.

The first integrated electromechanical unit 13 is located frontward of the battery 15. The second integrated electromechanical unit 14 is located rearward of the battery 15. The battery 15 is located between the first integrated electromechanical unit 13 and the second integrated electromechanical unit 14. The vehicle on-board charger 20 is located above the second integrated electromechanical unit 14.

The first-row seats 17 and the second-row seat 18 are arranged above the floor 16. The second-row seat 18 is located rearward of the first-row seats 17. The battery ECU 21 and the junction box 22, indicated by the single-dashed lines, are located below the second-row seat 18 and above the battery 15.

The positional relationship between the second-row seat 18, the battery ECU 21, and the junction box 22 will now be described with reference to Fig. 6. Fig. 6 is a cross-sectional view taken along line 6-6 in Fig. 5. As shown in Fig. 6, the battery ECU 21 and the junction box 22 are located below the second-row seat 18 and above the battery 15. The battery ECU 21 and the junction box 22 are laterally arranged side by side. The battery ECU 21 is arranged on the right side. The junction box 22 is arranged on the left side.

### Operation of the Second Embodiment

As shown in Fig. 6, the battery ECU 21 and the junction box 22, which are battery-related devices, are located below the second-row seat 18 and above the battery 15. As shown in Fig. 5, the vehicle on-board charger 20, which is a battery-related device, is arranged above the second integrated electromechanical unit 14. That is, the battery-related devices are respectively located below the second-row seat 18 and above the battery 15 and located above the second integrated electromechanical unit 14. As a result, compared to a vehicle in which battery-related devices are collectively arranged below the second-row seat 18 and above the battery 15, the entire vehicle height is lower.

Advantages of the Second Embodiment
(2-1) The electric vehicle 10 has a low-profile appearance.
(2-2) The battery ECU 21 is located below the second-row seat 18 and above the battery 15. As compared to a configuration in which the battery ECU 21 is located above the second integrated electromechanical unit 14, the distance between the battery ECU 21 and the battery 15 is shorter. This shortens the wire harness 120, which connects the battery ECU 21 to the battery 15. The shorter the wire harness 100 is, the less its weight. That is, the weight of the electric vehicle 10 is reduced. Additionally, a shorter wire harness reduces power loss within the wire harness. Further, the power loss in the wire harness 120, which connects the battery ECU 21 to the battery 15, is reduced.

### Modifications of the Second Embodiment

The second embodiment may be modified as follows. The present embodiment and the following modifications can be combined if the combined modifications remain technically consistent with each other.

If at least one battery-related device is located below the second-row seat 18 and above the battery 15 and at least one battery-related device is located above the second integrated electromechanical unit 14, the battery ECU 21 may be located above the second integrated electromechanical unit 14.

If at least one battery-related device is located below the second-row seat 18 and above the battery 15 and at least one battery-related device is located above the second integrated electromechanical unit 14, the junction box 22 may be located above the second integrated electromechanical unit 14.

If at least one battery-related device is located below the second-row seat 18 and above the battery 15 and at least one battery-related device is located above the second integrated electromechanical unit 14, the vehicle on-board charger 20 may be located below the second-row seat 18 and above the battery 15.

The battery-related devices arranged below the second-row seat 18 and above the battery 15 of the electric vehicle 10 do not have to be located at the positions mentioned in the second embodiment. For example, the battery ECU 21 may be located at a position on the left side below the second-row seat 18 and above the battery 15. The junction box 22 may be located at a position on the right side below the second-row seat 18 and above the battery 15. For example, the battery ECU 21 and the junction box 22 may be both located at positions on the right side below the second-row seat 18 and above the battery 15. For example, the battery ECU 21 and the junction box 22 may be both located at positions on the left side below the second-row seat 18 and above the battery 15. For example, the battery ECU 21 and the junction box 22 may be both located at positions on the middle below the second-row seat 18 and above the battery 15. For example, the battery ECU 21 and the junction box 22 may be both located in the front-rear direction below the second-row seat 18 and above the battery 15.

### Other Modifications

The following are elements that can be modified and are generally applicable to each of the above-described embodiments. The following modification can be combined as long as the combined modification remains technically consistent with each other.

The battery ECU 21 may perform control other than charging and discharging of the battery 15. For example, when an external charging device is connected to the charging port 19, the battery ECU 21 may control the charging of the electric vehicle 10 performed by the external charging device. The battery ECU 21 may control the electric power supplied by the battery 15 to the first electric power controller 131, thereby controlling the driving of the first motor 132. The battery ECU 21 may control the electric power supplied by the battery 15 to the second electric power controller 141, thereby controlling the driving of the second motor 142. The battery ECU 21 may be a centralized ECU that controls the electric vehicle 10.

The junction box 22 does not have to include the cutoff relay 25. For example, the battery 15 may include the cutoff relay 25. Even in this case, the high-voltage power supplied from the battery 15 is interrupted using the cutoff relay 25.

The battery 15 and the battery ECU 21 do not have to be connected to each other by the wire harness 120. For example, the battery 15 may be connected to the battery ECU 21 by a busbar. The battery 15 and the junction box 22 do not have to be connected to each other by the wire harness 110. The battery 15 may be connected to the junction box 22 by a busbar. The battery ECU 21 and the junction box 22 do not have to be connected to each other by the wire harness 150. The battery ECU 21 may be connected to the junction box 22 by a busbar. The vehicle on-board charger 20 and the junction box 22 do not have to be connected to each other by the wire harness 101. When the vehicle on-board charger 20 and the junction box 22 are located below the second-row seat 18 and above the battery 15, the vehicle on-board charger 20 and the junction box 22 may be connected to each other by a busbar. The battery ECU 21 is located above the second integrated electromechanical unit 14.

The electric vehicle 10 may be configured to use a DC power supply as an external charging device that charges the battery 15. For example, the charging port 19 may be usable for fast charging with a high-voltage DC power supply (e.g., 50 kW). In that case, the charging port 19 is electrically connected not only to the vehicle on-board charger 20 but also to the junction box 22. The charging port 19 and the junction box 22 may be electrically connected to each other by a wire harness. As a result, the DC power received from the DC power supply connected to the charging port 19 is supplied to the battery 15 via the junction box 22.

The charging port 19 is located on the left side of the electric vehicle 10 at a position rearward of the battery 15. The charging port 19 does not have to be located on the left side of the electric vehicle 10 at a position rearward of the battery 15. If at least one battery-related device is located below the second-row seat 18 and above the battery 15 and at least one battery-related device is located above the second integrated electromechanical unit 14, the charging port 19 may be located on the right side of the electric vehicle 10 at a position rearward of the battery 15. The charging port 19 may be located frontward of the battery 15.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric vehicle (10) having a drive wheel (11, 12) that is driven by electric power stored in a battery (15), the electric vehicle (10) comprising:
a first motor (132) and a second motor (142) which serve as a power source for driving the drive wheel (11, 12) and to which the electric power stored in the battery (15) is supplied;
a first electric power controller (131) that supplies electric power to the first motor (132);
a second electric power controller (141) that supplies electric power to the second motor (142);
a first integrated electromechanical unit (13) including the first motor (132) and the first electric power controller (131);
a second integrated electromechanical unit (14) including the second motor (142) and the second electric power controller (141); and
battery-related devices (20, 21, 22), wherein
the battery (15) is located below a floor (16) of the electric vehicle (10) and between the front wheel (11) and the rear wheel (12),
the first integrated electromechanical unit (13) is located frontward of the battery (15),
the second integrated electromechanical unit (14) is located rearward of the battery (15),
a first-row seat (17) and a second-row seat (18) are arranged on the floor (16), the second-row seat (18) being located rearward of the first-row seat (17), and
a plurality of battery-related devices (20, 21, 22) are separately disposed below the second-row seat (18) and above the battery (15), and above the second integrated electromechanical unit (14).

2. The electric vehicle (10) according to claim 1, wherein
the battery-related devices include:
a battery ECU (21) that controls charging and discharging of the battery (15);
a vehicle on-board charger (20) that charges the battery (15) with electric power from outside the electric vehicle (10); and
a junction box (22) that distributes electric power supplied from the battery (15).

3. The electric vehicle (10) according to claim 1 or 2, comprising a charging port (19) to which an AC power supply is connectable, wherein
the charging port (19) is connected to the vehicle on-board charger (20) by a wire harness (100),
the charging port (19) is located rearward of the battery (15) and is positioned on a side of the electric vehicle (10), and
the vehicle on-board charger (20) is located above the second integrated electromechanical unit (14).

4. The electric vehicle (10) according to any one of claims 1 to 3, wherein
the junction box (22) includes a cutoff relay (25) that interrupts the electric power supplied from the battery (15), the cutoff relay (25) being the battery-related device,
the battery (15) and the junction box (22) are connected to each other by a wire harness (110), and
the junction box (22) is located below the second-row seat (18) and above the battery (15).

5. The electric vehicle (10) according to any one of claims 1 to 4, wherein
the battery ECU (21) is located below the second-row seat (18) and above the battery (15), the battery ECU (21) being the battery-related device.

6. The electric vehicle (10) according to any one of claims 1 to 5, wherein
the vehicle on-board charger (20) is located above the second integrated electromechanical unit (14), the vehicle on-board charger (20) being the battery-related device, and
the battery ECU (21) and the junction box (22) are located below the second-row seat (18) and above the battery (15).

7. The electric vehicle (10) according to any one of claims 1 to 6, wherein
the first-row seat (17) includes two seats (17A, 17B) that are laterally arranged side by side,
a center tunnel (30) is arranged between the two seats (17A, 17B),
the center tunnel (30) is located below the floor (16) and above the battery (15),
the center tunnel (30) is located on the floor (16) so as to extend in a front-rear direction of the electric vehicle (10),
the center tunnel (30) is located below a seat surface of the second-row seat (18), and
the battery-related devices are located inside the center tunnel (30) and above the second integrated electromechanical unit (14), the center tunnel (30) being located below the second-row seat (18) and above the battery (15).
